(19) **Europäisches Patentamt**
**European Patent Office**
**Office européen des brevets**

(11) **EP 3 961 847 B1**

(12) **EUROPEAN PATENT SPECIFICATION**

(45) Date of publication and mention
of the grant of the patent:
**17.09.2025 Bulletin 2025/38**

(21) Application number: **20795222.7**

(22) Date of filing: **04.03.2020**

(51) International Patent Classification (IPC):
*H02J 9/06* (2006.01)        *H02J 7/02* (2016.01)
*H02J 7/00* (2006.01)

(52) Cooperative Patent Classification (CPC):
**B60L 53/30; H02J 7/0013; H02J 7/007; H02J 7/02;**
B60L 2210/10; B60L 2210/30; H02J 7/342;
H02J 2207/20; H02J 2310/48; Y02T 10/70;
Y02T 10/7072; Y02T 10/72; Y02T 90/12

(86) International application number:
**PCT/JP2020/009065**

(87) International publication number:
**WO 2020/217721 (29.10.2020 Gazette 2020/44)**

(54) **POWER SUPPLY DEVICE**

STROMVERSORGUNGSVORRICHTUNG

DISPOSITIF D'ALIMENTATION ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2019 JP 2019081628**

(43) Date of publication of application:
**02.03.2022 Bulletin 2022/09**

(73) Proprietor: **Hitachi, Ltd.**
**Tokyo 100-8280 (JP)**

(72) Inventors:
• **KO, Meirai**
**Tokyo 100-8280 (JP)**
• **KANOUDA, Akihiko**
**Tokyo 100-8280 (JP)**
• **KAWAGUCHI, Yuki**
**Tokyo 100-8280 (JP)**
• **FURUKAWA, Kimihisa**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(56) References cited:
**JP-A- H04 251 532      US-A1- 2002 101 747**

• **IRAKLIS ATHANASIOS ET AL: "Overview of
Three-Stage Power Converter Topologies for
Medium Frequency-Based Railway Vehicle
Traction Systems", IEEE TRANSACTIONS ON
VEHICULAR TECHNOLOGY, IEEE, USA, vol. 68,
no. 4, 1 April 2019 (2019-04-01), pages 3268 -
3278, XP011719650, ISSN: 0018-9545, [retrieved
on 20190416], DOI: 10.1109/TVT.2019.2895500**
• **WANG PING ET AL: "Towards Power FPGA:
Architecture, Modeling and Control of Multiport
Power Converters", 2018 IEEE 19TH
WORKSHOP ON CONTROL AND MODELING
FOR POWER ELECTRONICS (COMPEL), IEEE, 25
June 2018 (2018-06-25), pages 1 - 8,
XP033402333, DOI: 10.1109/
COMPEL.2018.8460019**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 961 847 B1

## Description

Technical Field

The present invention relates to a power supply device connected to an external power system and an electric storage device to supply electric power to power receiving equipment.

Background Art

The need for high-quality power controllable and miniaturized power supply devices arises from the widespread adoption of renewable energy generation and electric vehicles and the expanding use of electric storage devices.

In this regard, conventional techniques are known such as described in Non-Patent Literature 1 (Fig. 1(c)), Non-Patent Literature 2 (Fig. 4) and Patent Literature 1 (Fig. 1).

In the conventional techniques, in a power supply device driving a motor, an output side of one of a plurality of primary side power converters is connected to each of a plurality of primary windings of a transformer, and input sides of the plurality of primary side power converters are connected in series. Further, the input side of a secondary side power converter is connected to a secondary winding of the transformer.

Citation List

Non-Patent Literature

Non-Patent Literature 1: C. Gu, Z. Zheng, L. Xu, K. Wang and Y. Li, "Modeling and Control of a Multiport Power Electronic Transformer (PET) for Electric Traction Applications," IEEE Transactions on Power Electronics, vol. 31, .no. 2, pp. 915-927, February 2016
Non-Patent Literature 2:
I. Athanasios et al., "Overview of Three-Stage Power Converter Topologies for Medium-Frequency-Based Railway Vehicle Traction Systems", IEEE Transactions on Vehicular Technology, vol. 68, no. 4, pp. 3268-3278, April 2019

Patent Literature

Patent Literature 1: U.S. Patent Application Publication No. 2002/0101747

Summary of Invention

Technical Problem

With the conventional techniques as described above, by including the primary side power converter and the secondary side power converter, a size reduction of the transformer and power control on the primary side and the secondary side of the transformer are achieved. However, the conventional techniques as described above give no consideration to flexible control over the power flow from various power sources such as an external power system such as a commercial AC power supply, an electric storage device such as a storage battery, and the like.

Accordingly, the present invention provides a power supply device capable of flexibly controlling the power flow from various power sources and of being configured to have a reduced size.

Solution to Problem

To solve the above problem, a power supply device according to the independent claim 1 is provided. The converter, among others, includes a multi-winding transformer and a plurality of power converters connected to the multi-winding transformer. The multi-winding transformer has a plurality of first windings to which a plurality of first power converters of the plurality of power converters are connected. The plurality of first power converters include rectifier portions and converter portions that are connected to the rectifier portions and convert DC power to AC power. AC sides of the plurality of rectifier portions are connected in series to each other, and also connected to an external AC power system. DC sides of the rectifier portions are connected to DC sides of the converter portions. AC sides of the converter portions are connected to the plurality of first windings. The multi-winding transformer has a second winding to which a second power converter of the plurality of power converters is connected. An AC side of the second power converter is connected to the second winding. A DC side of the second power converter is connected to an electric storage device. The multi-winding transformer has a third winding to which a third power converter of the plurality of power converters is connected. An AC side of the third power converter is connected to the third winding. A DC side of the third power converter is connected to power receiving equipment. During a normal state of the external AC power system, the plurality of first power converters and the second power converter are controlled in order to transmit power from the external AC power system to the electric storage device via the plurality of first power converters, the plurality of first windings, the second winding, and the second power converter. During the normal state of the external AC power system, the plurality of first power converters and the third power converter are controlled in order to transmit power from the external AC power system to the power receiving equipment via the plurality of first power converters, the plurality of first windings, the third winding, and the third power converter. During power interruption of the external AC power system, the second power converter and the third power converter are controlled in order to transmit power from the electric storage device to the power receiving equipment via the second power converter, the second winding, the third winding, and the third power converter.

Advantageous Effects of Invention

According to the present invention, the power supply device can be configured to be miniaturized and the power flow between the external AC power system, the electric storage device, and the power receiving equipment can be flexibly controlled.

These and other objects, features and advantages will be apparent from the following description of embodiments. Brief Description of Drawings

Figure 1 is a circuit block diagram of a power supply device according to Example 1.
Figure 2 is a circuit diagram illustrating an example configuration of a main circuit of a unit converter.
Figure 3 is a diagram illustrating a state of power transmission in the power supply device according to Example 1, during the normal state of the external AC power system (first mode).
Figure 4 is a flowchart illustrating the flow of control in the power supply device according to Example 1, in the first mode.
Figure 5 is an operation waveform diagram illustrating current and voltage in the power supply device according to Example 1, in the first mode.
Figure 6 is a diagram illustrating a state of power transmission in the power supply device according to Example 1, during power interruption of the external AC power system (second mode).
Figure 7 is a flowchart illustrating the flow of control in the power supply device according to Example 1, in the second mode.
Figure 8 is an operation waveform diagram illustrating current and voltage in the power supply device according to Example 1, in the second mode.
Figure 9 is a circuit block diagram of a power supply device according to Example 2.
Figure 10 is a diagram illustrating a state of power transmission in the power supply device according to Example 2, in the first mode.
Figure 11 is a flowchart illustrating the flow of control in the power supply device according to Example 2, in the first mode.
Figure 12 is an operation waveform diagram illustrating current and voltage in the power supply device according to Example 2, in the first mode.

Description of Embodiments

Embodiments according to the present invention will now be described using the following Examples 1 and 2 with reference to the accompanying drawings. Throughout the drawings, like reference signs indicate identical structural elements or structural elements having similar functionality.

Example 1

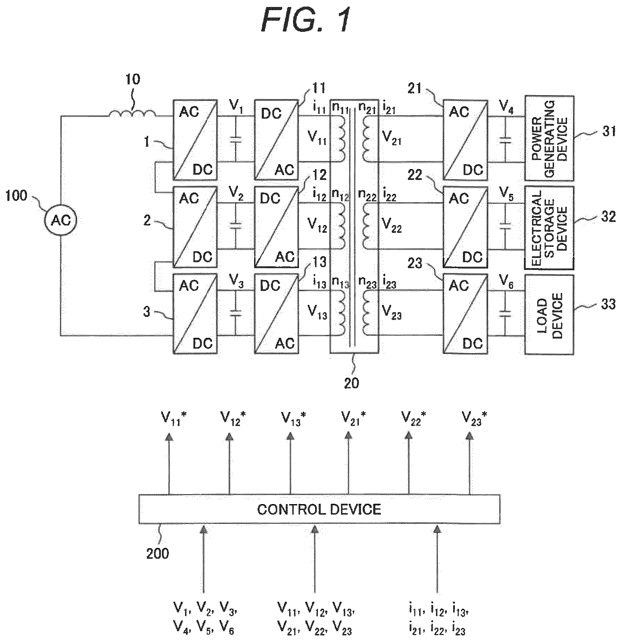

Figure 1 is a circuit block diagram of a power supply device of Example 1 according to the present invention.
As illustrated in Figure 1, the power supply device of Example 1 includes a multi-winding transformer 20 including a plurality of windings (six windings in Figure 1), and a plurality of power converters connected to the plurality of windings ($n_{11}$ to $n_{23}$) of the multi-winding transformer 20.
In the multi-winding transformer 20, the six separate windings ($n_{11}$ to $n_{23}$) are wound round a single magnetic core.
The winding $n_{11}$ is connected to a power converter consisting of a unit converter 1 and a unit converter 11. A DC side of the unit converter 1 and a DC side of the unit converter 11 are connected via a smoothing capacitor. Also, an AC side of the unit converter 11 is connected to the winding $n_{11}$.

The winding $n_{12}$ is connected to a power converter consisting of a unit converter 2 and a unit converter 12. A DC side of the unit converter 2 and a DC side of the unit converter 12 are connected via a smoothing capacitor. Also, an AC side of the unit converter 12 is connected to the winding $n_{12}$.

The winding $n_{13}$ is connected to a power converter consisting of a unit converter 3 and a unit converter 13. A DC side of the unit converter 3 and a DC side of the unit converter 13 are connected via a smoothing capacitor. Also, an AC side of the unit converter 13 is connected to the winding $n_{13}$.

The AC sides of the respective unit converters 1 to 3 are connected in series to each other and connected via a harmonic suppression reactor 10 to an external AC power system 100 (e.g., commercial AC power supply). In this manner, in Example 1, the AC sides of the plurality of respective unit converters (1 to 3) are connected in series to each other, so that the electric power can be received from the external AC power system 100 without going through a transformer. Sharing the voltage of the external AC power system 100 among the plurality of unit converters (1 to 3) enables a reduction in withstand voltage of a semiconductor device included in a main circuit of each unit converter. Thus, a reduction in size of the power supply device can be achieved.

The unit converters 1, 2, and 3 convert the AC power received from the external AC power system 100 to DC power. The unit converters 11, 12, 13 convert the DC power output by the respective unit converters 1, 2, and 3, to AC power having a predetermined frequency and a predetermined voltage, and then output the AC power to the respective windings $n_{11}$, $n_{12}$, $n_{13}$.

The winding $n_{21}$ is connected to an AC side of a power converter consisting of a unit converter 21. A DC side of the unit converter 21 includes a smoothing capacitor, and is connected via the smoothing capacitor to a power generating device 31. The power generating device 31 is a distributed power supply device for a solar photovoltaic power generation device, a wind power generation device, or the like.

The winding $n_{22}$ is connected to an AC side of a power converter consisting of a unit converter 22. A DC side of the unit converter 22 includes a smoothing capacitor, and is connected via the smoothing capacitor to an electric storage device 32. The electric storage device 32 includes a condenser, a charge discharge control circuit and/or the like. A storage battery, a capacitor and/or like may be applied as the condenser.

The winding $n_{23}$ is connected to an AC side of a power converter consisting of a unit converter 23. A DC side of the unit converter 23 includes a smoothing capacitor, and is connected via the smoothing capacitor to a load device 33 which is power receiving equipment.

The unit converter 21 converts the DC power from the power generating device 31 to AC power, and then outputs the AC power to the winding $n_{21}$.

The unit converter 22 converts the AC power output by the winding $n_{22}$ to DC power, and then outputs the DC power as power to be received by the electric storage device 32. The unit converter 22 also converts the DC power from the electric storage device 32 to AC power, and then outputs the AC power to the winding $n_{22}$ as power to be supplied from the electric storage device 32. In short, the unit converter 22 operates as a bidirectional converter.

The unit converter 23 converts the AC power output by the winding $n_{23}$ to DC power, and then outputs the DC power as power to be received by the load device 33.

In Example 1, since the power converter is connected to each of the plurality of windings of the multi-winding transformer 20, controlling the power converter enables control over the power transmission between the power supplying side (the external AC power system 100, the power generating device 31, the electric storage device 32 (when discharged)) and the power receiving side (the load device 33, the electric storage device 32 (when charged)). As described later, in Example 1, by controlling phases of voltages $V_{11}$ to $V_{13}$, $V_{21}$ to $V_{23}$ on the AC side of the unit converters 11 to 13, 21 to 23, i.e., phases of terminal voltages of the windings $n_{11}$ to $n_{23}$, the power transmission between the power supplying side and the power receiving side is controlled. In this way, the power supply device according to Example 1 can control the power flow between the power supplying side and the power receiving side in a flexible manner. Also, since the power converter is connected to each of the plurality of windings of the multi-winding transformer 20, the frequency for the multi-winding transformer 20 can be higher (e.g., 1 kHz or higher) in accordance with a switching frequency in the power converter. Therefore, the power supply device can be reduced in size since the multi-winding transformer 20 can be reduced in size.

A control device 200 generates reference values ($V_{11}^*$ to $V_{23}^*$) for AC side voltages of the unit converters, i.e., voltages ($V_{11}$ to $V_{23}$) between terminals of windings, based on: detection values of the DC side voltages ($V_1$ to $V_6$) of the unit converters; detection values of the AC side voltages of the unit converters, i.e., voltages ($V_{11}$ to $V_{23}$) between terminals of windings; and detection values of the AC side currents of the unit converters, i.e., currents ($i_{11}$ to $i_{23}$) flowing through the windings. The detection values are detected by voltage sensors and current sensors which are not shown. It is noted that the reference values ($V_{11}^*$ to $V_{23}^*$) are provided to the unit converters (11 to 23).

It is noted that, in Figure 1, all the detection values are illustrated as input to the control device 200 for the sake of convenience, but the control device 200 receives, as input, detection values corresponding to control means operating in the control device 200. Also, the control device 200 may use estimation values determined by computations, rather than the detection values of currents and voltages.

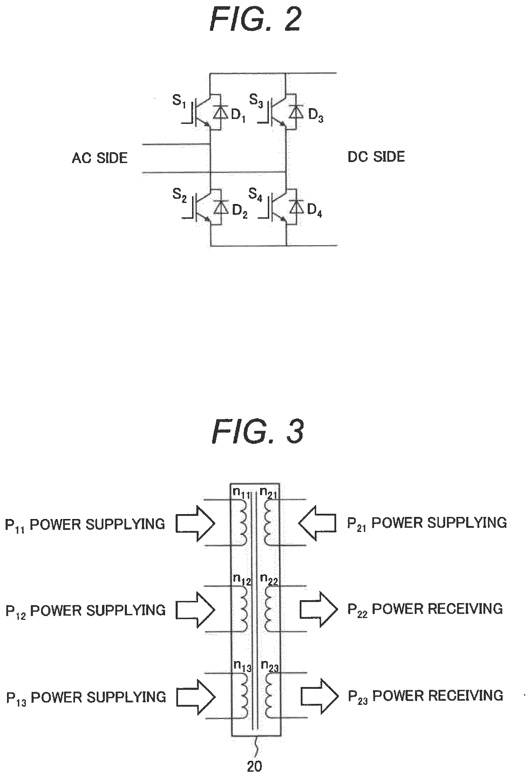

Figure 2 is a circuit diagram illustrating an example configuration of a main circuit of each of the unit converters 1 to 3, 11 to 13, 21 to 23.

In the example configuration illustrated in Figure 2, one semiconductor switching element (e.g., $S_1$) and one diode (e.g., $D_1$) are connected in antiparallel to form an arm. Two arms are connected in series to form a leg (half bridge circuit). Further, two legs are connected in parallel to form a single-phase full bridge circuit which is to be the main circuit of the unit converter. A point of series connection of two arms in each leg is located on the AC side of the unit converter and both ends of parallel connection of two legs are located on the DC side of the unit converter.

For the semiconductor switching elements $S_1$ to $S_4$, IGBT (Insulated Gate Bipolar Transistor) is applied in the example configuration in Figure 2, which is not intended to be limiting. Alternatively, MOSFET (Metal Oxide Semiconductor Field Effect Transistor) or bipolar junction transistor may be applied.

The unit converters 1 to 3 of the plurality of unit converters operate as rectifiers. That is, in each unit converter 1, 2, 3, the diodes $D_1$ to $D_4$ operate as rectifier diodes. It should be noted that harmonic reduction and power factor improvement are achieved by operating the semiconductor switching elements $S_1$ to $S_4$ in the unit converter 1, 2, 3.

It is noted that, as the unit converter 1, 2, 3, a single-phase diode rectifier circuit without the semiconductor switching elements $S_1$ to $S_4$ as illustrated in Figure 2 may be applied.

Two unit converters performing the power transmission via the multi-winding transformer, i.e., one of the unit converters 11, 12, 13, 21 and unit converter 22 (only when the electric storage device 32 is discharged) which are on the power supplying side, and one of the unit converters 22 (only when the electric storage device 32 is charged) and 23 which are on the power receiving side, have a circuit configuration similar to a so-called DAB (Dual Active Bridge) DC/DC converter with the multi-winding transformer 20. Therefore, controlling a phase difference between the AC side voltages of such two unit converters enables control over power transmitted between the two unit converters.

It is noted that each of the unit converters 11 to 23 includes a drive control device (not shown) by which the semiconductor switching elements $S_1$ to $S_4$ in each unit converter are on-off controlled in response to the voltage reference value $V_{11}^*$ to $V_{23}^*$ generated by the control device 200. Therefore, the unit converters 11 to 23 control the voltages to $V_{23}$ on the AC side to the voltage reference value $V_{11}^*$ to $V_{23}^*$ generated by the control device 200.

An overview of operation of the power supply device according to Example 1 will be described below.

The operation of the power supply device differs between during the normal state and during the power interruption of the external AC power system 100. For this reason, the operation during the normal state and the operation during the power interruption will be referred to as a first mode and a second mode, respectively, in the following description.

In the first mode, the power supplied from the external AC power system 100 side and the power generating device 31 side is received by the electric storage device 32 side (charge state) and the load device 33 side. In this case, each of the unit converters 11 to 13 controls the output voltage ($V_{11}$, $V_{12}$, $V_{13}$) to a predetermined voltage (e.g., rated voltage), and the unit converter 21 controls the output voltage $V_{21}$ to be in the vicinity of a predetermined voltage (e.g., rated voltage). Also, the unit converter 22 controls the AC side voltage $V_{22}$ to be in the vicinity of a predetermined voltage (e.g., rated voltage), and also controls the phase of $V_{22}$ to output the power charged to the electric storage device 32. The unit converter 23 controls the phase of the AC side voltage $V_{23}$ to output the power to be used on the load device 33 side.

In the second mode, the power supplied from the power generating device 31 side and the electric storage device 32 side (discharge state) is received by the load device 33 side. In this case, the unit converter 22 controls the AC side voltage $V_{22}$ to a predetermined voltage (e.g., rated voltage), and the unit converter 21 controls the AC side voltage $V_{21}$ to be in the vicinity of a rated voltage. And, the unit converter 23 controls the phase of the AC side voltage $V_{23}$ to output the power to be used in the load device.

Here, each of the unit converters 11 to 13 controls the voltage ($V_{11}$, $V_{12}$, $V_{13}$) on the AC side to be in the vicinity of a predetermined voltage (e.g., rated voltage).

Thus, the voltages $V_1$, $V_2$, $V_3$ on the DC side of the unit converters 11 to 13 are controlled to an approximately constant value. Because of this, during the power interruption of the external AC power system 100, an increase in $V_1$, $V_2$, $V_3$ caused by the incoming power from the electric storage device 32 side is reduced. Therefore, the semiconductor switching elements and the diodes included in the unit converters 11 to 13 are protected from overvoltage. Therefore, the reliability of the power supply device is improved. Also, a reduction in power loss of the power supply device and in size of the power supply device can be achieved because higher withstand voltage is not required for the semiconductor switching elements and the diodes.

The operation of the power supply device according to Example 1 will be described below in detail in relation to each of the first mode and the second mode.

Figure 3 is a diagram illustrating the state of power transmission in the power supply device according to Example 1, in the first mode, i.e., during the normal state of the external AC power system 100.

As illustrated in Figure 3, the powers $P_{11}$, $P_{12}$, $P_{13}$ supplied from the external AC power system 100 side are respectively input to the windings $n_{11}$, $n_{12}$, $n_{13}$ of the multi-winding transformer 20. Also, the power $P_{21}$ supplied from the power generating device 31 side is input to the winding $n_{21}$ of the multi-winding transformer 20. The powers $P_{11}$ to $P_{13}$ and $P_{21}$ are transmitted to the windings $n_{22}$ and $n_{23}$, and then output from the windings $n_{22}$ and $n_{23}$. The powers $P_{22}$ and $P_{23}$ respectively output from the windings $n_{22}$ and $n_{23}$ are respectively received by the electric storage device 32 and the load device 33. It is noted that the electric storage device 32 is charged by the power $P_{22}$.

It should be noted that, in Example 1, the efficiency of the multi-winding transformer 20 is approximately 100%, and the total input power ($P_{11}+P_{12}+P_{13}+P_{21}$) to the multi-winding transformer 20 and the total output power ($P_{22}+P_{23}$) from the multi-winding transformer 20 are substantially equal to each other.

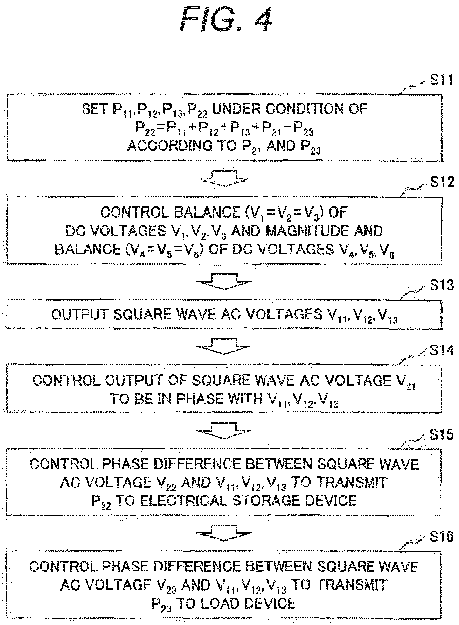

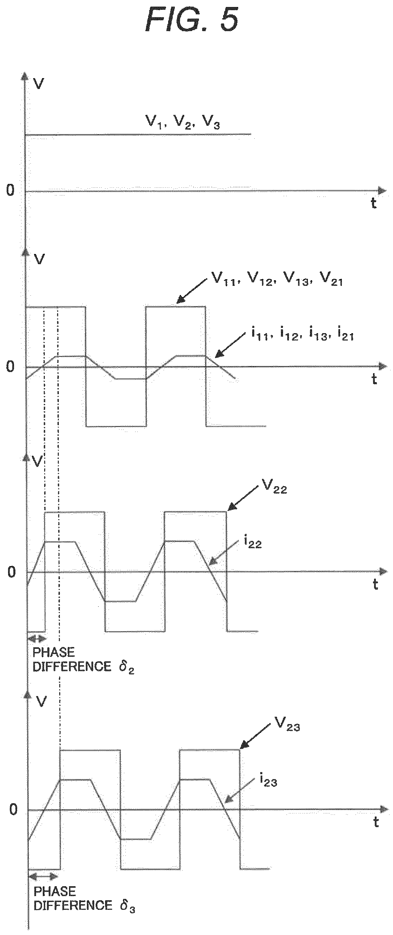

Figure 4 is a flowchart illustrating the flow of control in the power supply device according to Example 1, in the first mode, i.e., during the normal state of the external AC power system 100. Also, Figure 5 is an operation waveform diagram illustrating current and voltage in the power supply device according to Example 1, in the first mode.

The control flow illustrated in Figure 4 will now be described with reference to Figure 5 as is appropriate.

Initially, at step S11, under the condition of Equation (1) (derived from $P_{11}+P_{12}+P_{13}+P_{21}$ (input to the multi-winding transformer 20) = $P_{22}+P_{23}$ (output from the multi-winding transformer 20)), the control device 200 (Figure 1) sets the powers $P_{11}$, $P_{12}$, $P_{13}$ which are to be respectively input to the windings $n_{11}$, $n_{12}$, $n_{13}$ of the multi-winding transformer 20 from the external AC power system 100 side, and the power $P_{22}$ which is to be output from the multi-winding transformer 20 to the electric storage device 32 side, according to the power $P_{21}$ which is supplied from the power generating device 31 to be input to the winding $n_{21}$ of the multi-winding transformer 20, and the power $P_{23}$ which is output from the winding $n_{23}$ of the multi-winding transformer 20 to be received by the load device 33.

$$P_{22} = P_{11} + P_{12} + P_{13} + P_{21} - P_{23} \ \dots \ (1)$$

$P_{22}$ varies according to conditions (SOC and/or the like) and a charging rate of the electric storage device 32, and/or the like. The control device 200 calculates $P_{22}$ based on, for example, detection values of the end-to-end voltage of the winding $n_{22}$ and the current $i_{22}$ flowing between both ends of the winding $n_{22}$. The control device 200 also calculates $P_{23}$ based on detection values of the end-to-end voltage ($V_{23}$) of the winding $n_{23}$ and the current $i_{23}$ flowing through the winding $n_{23}$. The control device 200 also calculates $P_{21}$ based on detection values of the end-to-end voltage ($V_{21}$) of the winding $n_{21}$ and the current $i_{21}$ flowing through the winding $n_{21}$. The control device 200 further sets $P_{11}$, $P_{12}$; $P_{13}$ based on Equation (1). It is noted that, in Example 1, the unit converters 11, 12, 13 are identical in power capacity, i.e., $P_{11}$, $= P_{12,} = P_{13}$.

Subsequently, at step S12, the control device 200 controls the unit converters 11, 12, 13 such that the DC output voltages of the unit converters 1, 2, 3 (operating as rectifiers), i.e., the DC side voltages $V_1$, $V_2$, $V_3$ of the unit converters 11, 12, 13, are in balance, i.e., $V_1 = V_2 = V_3$ (Figure 5). It is noted that, in Example 1, the unit converters 1, 2, 3 are identical in circuit configuration (Figure 2), and the input voltage of each unit converter 1, 2, 3 is one third the system voltage of the external AC power system 100. Therefore, the DC output voltage of each unit converter 1, 2, 3 becomes a rectified voltage of one third the AC input voltage of the unit converter 1, 2, 3.

In Example 1, the unit converters 21, 22, 23 are also controlled such that V4, $V_5$, $V_6$ take predetermined values and $V_4 = V_5 = V_6$ results. Thereby, a DC power supplying system can be constructed using the power supply device according to Example 1. In this case, $V_4 = V_5 = V_6$ = DC bus voltage. It is noted that $V_1 = V_2 = V_3 = V_4 = V_5 = V_6$ may be set according to a system voltage of the external AC power system and/or a DC bus voltage, or alternatively for the sake of simplifying the control.

Subsequently, at step S13, the control device 200 controls the unit converters 11, 12, 13 such that the unit converter 11, 12, 13 outputs a voltage $V_{11}$, $V_{12}$, $V_{13}$ (Figure 5) which is a square wave AC voltage having a constant voltage (rated voltage) according to $V_4$, $V_5$, $V_6$ and a constant frequency.

In the example, the unit converter 11, 12, 13 outputs, as $V_{11}$, $V_{12}$, $V_{13}$, the square wave AC voltage of a constant voltage (rated voltage) and a constant frequency by on-off controlling the semiconductor switching elements in duty factor of 50%.

It is noted that $V_{11}$, $V_{12}$, $V_{13}$ have no phase difference from each other and are used as a phase reference voltage as described later.

Subsequently, at step S14, the control device 200 controls the unit converter 21 such that the unit converter 21 outputs the voltage $V_{21}$ which is in the vicinity of a predetermined voltage (rated voltage) and in phase with $V_{11}$, $V_{12}$, $V_{13}$. It is noted that in Example 1, $V_{21}$ is a square wave AC voltage of a constant voltage (rated voltage) and a constant frequency as in the case of $V_{11}$, $V_{12}$, $V_{13}$, and is in phase with $V_{11}$, $V_{12}$, $V_{13}$ (Figure 5). In this way, it is possible to supply the power ($P_{11}+P_{12}+P_{13}+P_{21}$) from the external AC power system 100 side and the power generating device 31 side to the electric storage device 32 side and the load device 33 side. It is noted that, since $V_{11}$, $V_{12}$, $V_{13}$ are in phase with one another, any one of them may be used as a phase reference (the same applied to subsequent steps).

Subsequently, at step S15, the control device 200 controls the unit converter 22 such that the voltage $V_{22}$ on the AC side of the unit converter 22 is in the vicinity of a predetermined voltage (rated voltage) and has a phase difference from $V_{11}$, $V_{12}$, $V_{13}$ ("$\delta_2$" in Figure 5). It is noted that in Example 1, $V_{22}$ is a square wave AC voltage of a constant voltage (rated voltage) and a constant frequency as in the case of $V_{11}$, $V_{12}$, $V_{13}$, and lags in phase behind $V_{11}$ $V_{12}$, $V_{13}$ (Figure 5). In this way, $P_{22}$ set in step S11 is transferred from the external AC power system 100 side and the power generating device 31 side to the electric storage device 32 side.

Subsequently, at step S16, the control device 200 controls the unit converter 23 such that the voltage $V_{23}$ on the AC side of the unit converter 23 is in the vicinity of a predetermined voltage (rated voltage) and has a phase difference from $V_{11}$, $V_{12}$, $V_{13}$ ("$\delta_3$" in Figure 5). It is noted that in Example 1, $V_{23}$ is a square wave AC voltage of a constant voltage (rated voltage) and a constant frequency as in the case of $V_{11}$, $V_{12}$, $V_{13}$, and lags in phase behind $V_{11}$, $V_{12}$, $V_{13}$ (Figure 5). In this way, $P_{23}$ set in step S11 is transferred from the external AC power system 100 side and the power generating device 31 side to the load device 33 side.

Here, the phase difference of $V_{22}$ ($\delta_2$) and the phase difference of $V_{23}$ ($\delta_3$) are set, for example, by means as described below (the same applied to the second mode).

The power transmission by setting a phase difference between the square wave AC voltage on the power supplying side ($V_{11}$, $V_{12}$, $V_{13}$, $V_{21}$) and the square wave AC voltage on the power receiving side ($V_{22}$, $V_{23}$) as described in steps S15, *S16* is the principle of operation of a so-called DAB (Dual Active Bridge) converter. Given the circuit operation of the well-known DAB converters, $P_{11}$, $P_{12}$, $P_{13}$, $P_{21}$, $P_{22}$, $P_{23}$ are expressed mathematically using $V_1$ to $V_6$, the phase difference of $V_{22}$ ($\delta_2$), and the phase difference of $V_{23}$ ($\delta_3$) and circuit constants (a leakage inductance and the like) of the multi-winding transformer 20. Based on the mathematic expressions and Equation (1), the phase differences $\delta_2$, $\delta_3$ are calculated in the control device 200 as a function of each power value set in step S11.

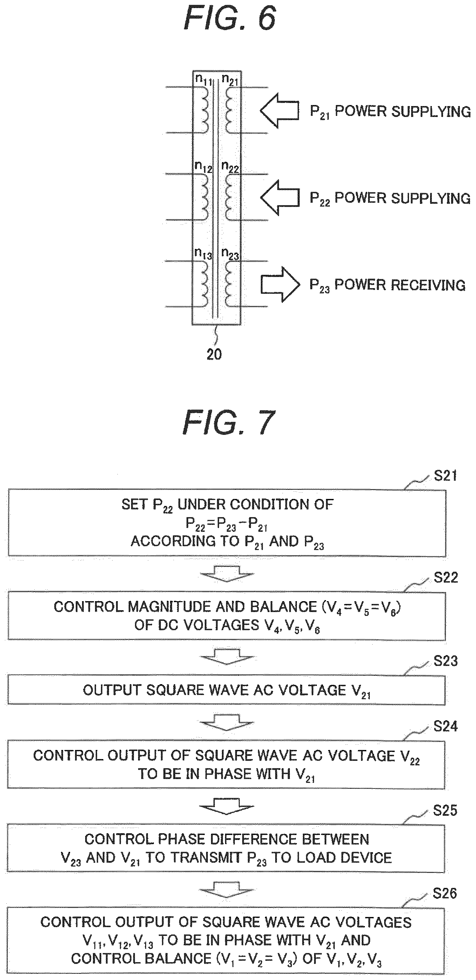

Figure 6 is a diagram illustrating the state of power transmission in the power supply device according to Example 1, in the second mode, i.e., during power interruption of the external AC power system 100.

As illustrated in Figure 6, no power is supplied from the external AC power system 100 side. Also, the power $P_{21}$ supplied from the power generating device 31 side is input to the winding $n_{21}$ of the multi-winding transformer 20. Also, the power $P_{22}$ supplied from the electric storage device 32 side (discharge power of the electric storage device 32) is input to the winding $n_{22}$ of the multi-winding transformer 20. The powers $P_{21}$ and $P_{22}$ are transferred to the winding $n_{23}$ to be output therefrom. The power $P_{23}$ output from the winding $n_{23}$ is received by the load device 33.

It is noted that, in Example 1, the efficiency of the multi-winding transformer 20 is approximately 100%, and the total input power ($P_{21}+P_{22}$) to the multi-winding transformer 20 and the total output power ($P_{23}$) from the multi-winding transformer 20 are substantially equal to each other.

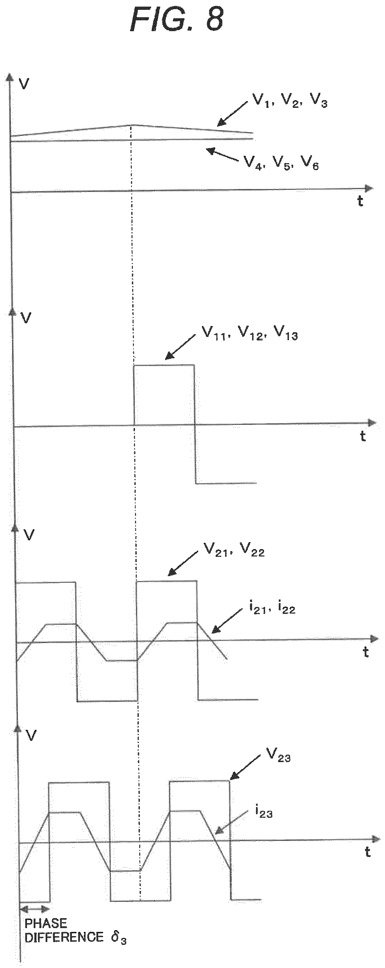

Figure 7 is a flowchart illustrating the flow of control in the power supply device according to Example 1, in the second mode, i.e., during the power interruption of the external AC power system 100. Also, Figure 8 is an operation waveform diagram illustrating current and voltage in the power supply device according to Example 1, in the second mode.

The control flow illustrated in Figure 7 will now be described with reference to Figure 8 as is appropriate.

Initially, at step S21, under the condition of Equation (2) (derived from $P_{21}+P_{22}$ (input to the multi-winding transformer 20) = $P_{23}$ (output from the multi-winding transformer 20)), the control device 200 (Figure 1) sets the power $P_{22}$ which is to be input to the winding $n_{22}$ of the multi-winding transformer 20 from the electric storage device 32 side, according to the power $P_{21}$ which is supplied from the power generating device 31 and then input to the winding $n_{21}$ of the multi-winding transformer 20, and the power $P_{23}$ which is output from the winding $n_{23}$ of the multi-winding transformer 20 and then received by the load device 33.

$$P_{22} = P_{23} - P_{21} \ \dots \ (2)$$

Subsequently, at step S22, the control device 200 controls the unit converters 21, 22, 23 such that $V_4$, $V_5$, $V_6$ takes a predetermined value and $V_4 = V_5 = V_6$ results (Figure 8). Thus, control similarly to that in step S12 in the first mode (Figure 5) is continuously executed over the unit converters 21, 22, 23.

Here, $V_1$, $V_2$, $V_3$ rise immediately after the power interruption when discharge of the electric storage device 32 and/or the like causes the power to flow into the unit converters 11, 12, 13 side (Figure 8). Because of this, where the control in the first mode is performed such that $V_1 = V_2 = V_3 = V_4 = V_5 = V_6$, $V_1 = V_2 = V_3 > V_4 = V_5 = V_6$ results in the power interruption (Figure 8).

Subsequently, at step S23, the control device 200 controls the unit converter 21 such that the unit converter 21 outputs a voltage $V_{21}$ which is at a constant voltage (in the vicinity of a rated voltage) and of a constant frequency. In Example 1, the unit converter 21 outputs, as $V_{21}$, a square wave AC voltage (Figure 8) of a constant voltage (rated voltage) and a constant frequency by on-off controlling the semiconductor switching elements in duty factor of 50%. In short, the unit converter 21 continues the operation in the first mode.

It is noted that $V_{21}$ is used as a phase reference voltage during the power interruption.

Subsequently, at step S24, the control device 200 controls the unit converter 22 such that the voltage $V_{22}$ on the AC side of the unit converter 22 is a square wave AC voltage of a constant voltage (in the vicinity of the rated voltage) and a constant frequency (the same frequency as $V_{21}$) continuously from the first mode, and is in phase with $V_{21}$ (Figure 8). In this way, it is possible to supply the power ($P_{21}+P_{22}$) from the power generating device 31 side and the electric storage device 32 side.

Subsequently, at step S25, the control device 200 controls the unit converter 23 such that the voltage $V_{23}$ on the AC side of the unit converter 23 is in the vicinity of a predetermined voltage (rated voltage) and has a phase difference from $V_{21}$ ("$\delta_3$" in Figure 8). It is noted that in Example 1, the control device 200 controls the unit converter 23 such that, as in the case of $V_{21}$, $V_{23}$ is a square wave AC voltage of a constant voltage (rated voltage) and a constant frequency, and lags in phase behind $V_{21}$ (Figure 8). In this way, the power $P_{23}$ is transferred to the load device 33 side.

Here, the phase difference of $V_{23}$ ($\delta_3$) can be set with consideration given to the circuit operation of the well-known DAB converters, as in the case of the above-described first mode. Specifically, $P_{23}$ is expressed mathematically using $V_4$ to $V_6$, the phase difference of $V_{23}$ ($\delta_3$), and circuit constants (a leakage inductance and the like) of the multi-winding transformer 20. Based on the mathematic expressions and Equation (2), the phase difference $\delta_3$ is calculated in the control device 200.

Subsequently, at step S26, the control device 200 controls the unit converters 11, 12, 13 during the power interruption such that the voltage on the AC side of the unit converters 11, 12, 13 is in the vicinity of a rated voltage. At this time, the control device 200 controls the unit converters 11, 12, 13 such that the voltage $V_{11}$, $V_{12}$, $V_{13}$ on the AC side of each unit converter 11, 12, 13 is a square wave AC voltage of a constant voltage and a constant frequency and also $V_{11}$, $V_{12}$, $V_{13}$ are in phase with $V_{21}$. Further, the control device 200 controls the unit converters 11, 12, 13 such that $V_{11}$, $V_{12}$, $V_{13}$ result in $V_{11} = V_{12} = V_{13}$ in the vicinity of a rated voltage, and also controls the unit converters 11, 12, 13 such that the DC side voltages $V_1$, $V_2$, $V_3$ of the unit converters 11, 12, 13 are in balance, that is, $V_1 = V_2 = V_3$.

In this way, since the unit converters 11, 12, 13 operate to output power, a rise of $V_1$, $V_2$, $V_3$ from immediately after the power interruption is minimized. Therefore, the semiconductor switching elements included in each unit converter 11, 12, 13 are protected from overvoltage. Also, the voltage balance control prevents an overvoltage from being applied locally in the unit converters 11, 12, 13. Therefore, when the withstand voltage is set for the semiconductor switching element, the elimination of the need for allowing for a rise in voltage during power interruption enables a reduction in withstand voltage of the semiconductor switching element.

Example 2

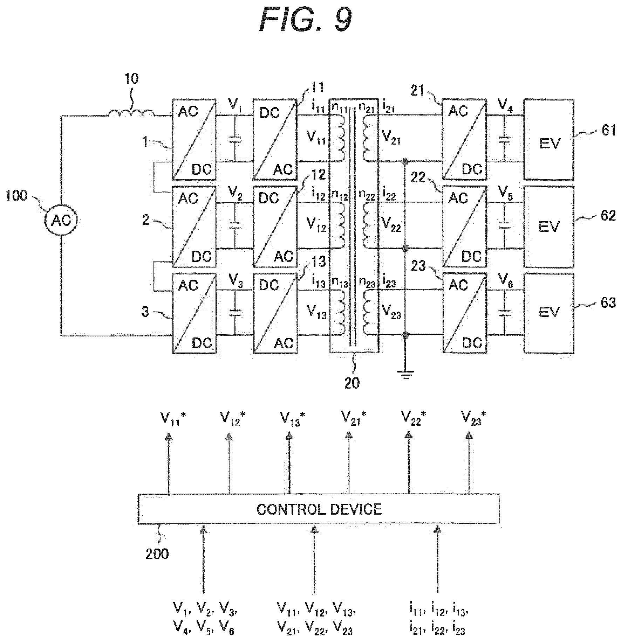

Example 2 according to the present invention will now be described with reference to Figures 9 to 12. Note that differences from Example 1 are mainly described.

Figure. 9 is a circuit block diagram of a power supply device of Example 2 of embodiments according to the present invention.

As illustrated in Figure 9, in Example 2, electric vehicles 61, 62, 63 (EV) are respectively connected to the DC sides of the unit converters 21, 22, 23. That is, the power supply device according to Example 2 functions as a power source for a charging device to charge a plurality of electric vehicles. It is noted that each of the electric vehicles 61, 62, 63 is equipped with an electric storage device including a condenser, and the condenser of the electric storage device is charged by the power supply device according to Example 2.

Since an object to be supplied with power is an electric vehicle, the power supply device side is grounded. It is noted that, in Example 2, as illustrated in Figure 9, one of both ends of each winding $n_{21}$, $n_{22}$, $n_{23}$ of the multi-winding transformer 20 is grounded.

Other circuit configurations, including a configuration of each unit converter (Figure 2), are similar to those in Example 1 described above.

An overview of operation of the power supply device according to Example 2 will be described below.

The operation of the power supply device differs between during the normal state and during the power interruption of the external AC power system 100. For this reason, the operation during the normal state and the operation during the power interruption will be referred to as a first mode and a second mode, respectively, in the following description.

In the first mode, the power supplied from the external AC power system 100 side is received on the electric vehicle 61, 62, 63 side (charge state). In this case, $V_{11}$, $V_{12}$, $V_{13}$ are put in phase with one another and each phase difference between the voltages and $V_{21}$, $V_{22}$, $V_{23}$ is adjusted so that a power to be charged can be set for each electric vehicle. Therefore, according to the capacity of a storage battery of an electric vehicle, a desired charging speed and the like, the power to be charged can be adjusted.

In the second mode, power transmission between the electric vehicles 61, 62, 63 is enabled. For example, in the event of power interruption of the external AC power system 100, an electric vehicle with the highest priority to be charged and an electric vehicle needing to be charged in a hurry can be charged by the power stored in another electric vehicle. Further, similarly to Example 1, the unit converters 11 to 13 are operated. In this way, in the event of power interruption of the external AC power system 100, a rise of $V_1$, $V_2$, $V_3$ caused by the inflow of power from the electric vehicle 61, 62 side is minimized.

The operation of the power supply device according to Example 2 will be described below in detail in relation to each of the first mode and the second mode.

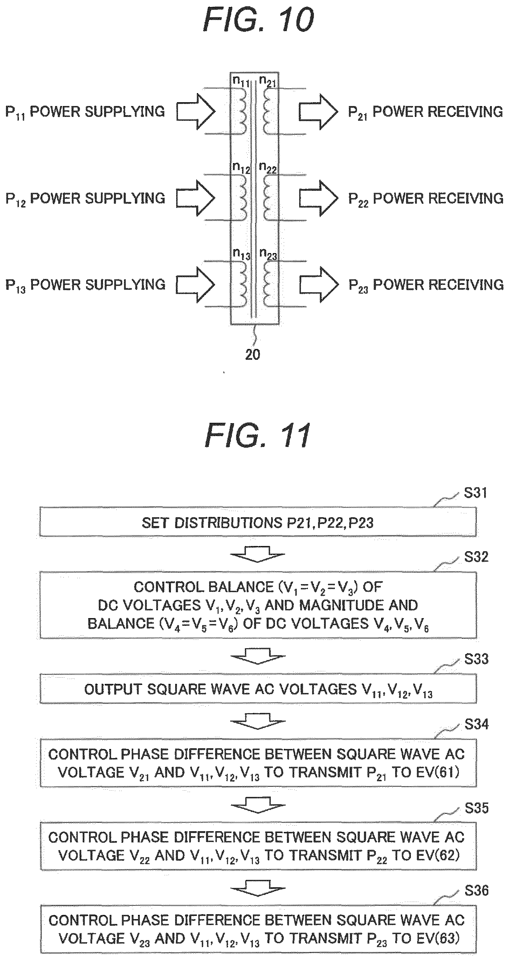

Figure 10 is a diagram illustrating the state of power transmission in the power supply device according to Example 2, in the first mode, i.e., during the normal state of the external AC power system 100.

As illustrated in Figure 10, powers $P_{11}$, $P_{12}$, $P_{13}$ supplied from the external AC power system 100 side are respectively input to the windings $n_{11}$, $n_{12}$, $n_{13}$ of the multi-winding transformer 20. The powers $P_{11}$ to $P_{13}$ are transferred to the windings $n_{21}$ to $n_{23}$ and then output from the windings $n_{22}$ to $n_{23}$. Powers $P_{21}$, $P_{22}$, $P_{23}$ output respectively from the windings $n_{21}$, $n_{22}$, $n_{23}$ are respectively received by the electric vehicles 61, 62 and 63.

It should be noted that, in Example 2, the efficiency of the multi-winding transformer 20 is approximately 100%, and the total input power ($P_{11}$+$P_{12}$+$P_{13}$) to the multi-winding transformer 20 and the total output power ($P_{21}$+$P_{22}$+$P_{23}$) from the multi-winding transformer 20 are substantially equal to each other.

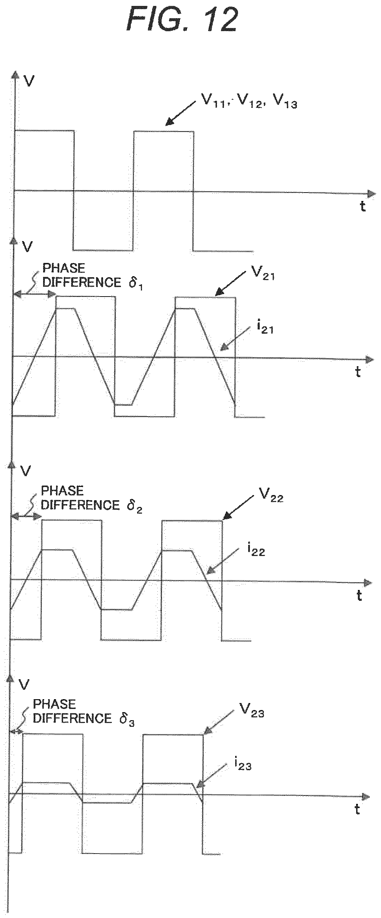

Figure 11 is a flowchart illustrating the flow of control in the power supply device according to Example 2, in the first mode, i.e., in the normal state of external AC power system 100. Figure 12 is an operation waveform diagram illustrating current and voltage in the power supply device according to Example 2, in the first mode.

The control flow illustrated in Figure 11 will now be described with reference to Figure 12 as is appropriate.

Initially, at step S31, the control device 200 sets power distributions $P_{21}$, $P_{22}$, $P_{23}$ distributed among the electric vehicles 61, 62, 63. $P_{21}$, $P_{22}$, $P_{23}$ vary according to conditions (SOC and/or the like) and a desired charging speed of an electric storage device mounted on each electric vehicle 61, 62, 63, and the like. The control device 200 calculates, for example, $P_{21}$ based on detection values of the end-to-end voltage $V_{21}$ of the winding $n_{21}$ and the current $i_{21}$ flowing through the winding $n_{21}$. The control device 200 also calculates $P_{22}$ based on detection values of the end-to-end voltage $V_{22}$ of the winding $n_{22}$ and the current $i_{22}$ flowing through the winding $n_{22}$, and calculates $P_{23}$ based on detection values of the end-to-end voltage $V_{23}$ of the winding $n_{23}$ and the current $i_{23}$ flowing through the winding $n_{23}$.

Subsequently, at step S32, the control device 200 controls the unit converters 11, 12, 13 such that the voltages $V_1$, $V_2$, $V_3$ on the DC side of the unit converters 11, 12, 13 are in balance, i.e., $V_1 = V_2 = V_3$ results. The control device 200 also controls the unit converters 21, 22, 23 such that the voltages $V_4$, $V_5$, $V_6$ on the DC side of the unit converters 21, 22, 23 are in balance, i.e., $V_4 = V_5 = V_6$ results.

Subsequently, at step S33, the control device 200 controls the unit converters 11, 12, 13 such that the voltage $V_{11}$, $V_{12}$, $V_{13}$ on the AC side of each unit converter 11, 12, 13 is a square wave AC voltage (Figure 12) of a constant voltage (rated voltage) and a constant frequency. In Example 2, each unit converter 11, 12, 13 outputs, as $V_{11}$, $V_{12}$, $V_{13}$, a square wave AC voltage of a constant voltage (rated voltage) and a constant frequency by on-off controlling the semiconductor switching elements in duty factor of 50%. It is noted that $V_{11}$, $V_{12}$, $V_{13}$ have no phase difference and are used as a phase reference voltage as described later. It is noted that any of $V_{11}$, $V_{12}$, $V_{13}$ may be used as a phase reference voltage.

Subsequently, at step S34, the control device 200 controls the unit converter 21 such that the voltage $V_{21}$ on the AC side of the unit converter 21 is in the vicinity of a predetermined voltage (rated voltage) and has a phase difference from $V_{11}$, $V_{12}$, $V_{13}$ ("$\delta_1$" in Figure 12). It is noted that in Example 2, the control device 200 controls the unit converter 21 such that $V_{21}$ is a square wave AC voltage of a constant voltage (rated voltage) and a constant frequency, and lags in phase behind $V_{11}$, $V_{12}$, $V_{13}$ (Figure 12). In this way, the power $P_{21}$ is transferred to the electric vehicle 61 side.

Subsequently, at step S35, the control device 200 controls the unit converter 22 such that the voltage $V_{22}$ on the AC side of the unit converter 22 is in the vicinity of a predetermined voltage (rated voltage) and has a phase difference from $V_{11}$, $V_{12}$, $V_{13}$ ("$\delta_2$" in Figure 12). It is noted that in Example 2, the control device 200 controls the unit converter 22 such that $V_{22}$ is a square wave AC voltage of a constant voltage (rated voltage) and a constant frequency, and lags in phase behind $V_{11}$, $V_{12}$, $V_{13}$ (Figure 12). In this way, the power $P_{22}$ is transferred to the electric vehicle 62 side.

Subsequently, at step S36, the control device 200 controls the unit converter 23 such that the voltage $V_{23}$ on the AC side of the unit converter 23 is in the vicinity of a predetermined voltage (rated voltage) and has a phase difference from $V_{11}$, $V_{12}$, $V_{13}$ ("$\delta_3$" in Figure 12). It is noted that in Example 2, the control device 200 controls the unit converter 23 such that $V_{23}$ is a square wave AC voltage of a constant voltage (rated voltage) and a constant frequency, and lags in phase behind $V_{11}$, $V_{12}$, $V_{13}$ (Figure 12). In this way, the power $P_{23}$ is transferred to the electric vehicle 63 side.

It is noted that, in Figure 12, $P_{21} > P_{22} > P_{23}$, and $\delta_1 > \delta_2 > \delta_3$.

Similarly to Example 1 described above, the phase differences $\delta_1$, $\delta_2$, $\delta_3$ are set with consideration given to the operation of a well-known DAB converter. For example, $P_{11}$, $P_{12}$, $P_{13}$, $P_{21}$, $P_{22}$, $P_{23}$ are expressed mathematically using $V_1$ to $V_6$, the phase difference of $V_{21}$ ($\delta_1$), the phase difference of $V_{22}$ ($\delta_2$), the phase difference of $V_{23}$ ($\delta_3$), and circuit constants (a leakage inductance and the like) of the multi-winding transformer 20, and are calculated in the control device 200 based on the mathematic expressions and the conditions that "input power to the multi-winding transformer ($P_{11} + P_{12} + P_{13}$) = output power from the multi-winding transformer ($P_{21} + P_{22} + P_{23}$)".

It is noted that the operation in the second mode of the power supply device in Example 2 is similar to the operation in Example 1, as long as the power generating device 31, the electric storage device 32, and the load device 33 described in Example 1 (Figure 1) are respectively replaced with the electric vehicle 61, the electric vehicle 62, and the electric vehicle 63. In this case, during the power interruption of the external AC power system 100, the power supplied from the electric vehicle 61 and the electric vehicle 62 are received by the electric vehicle 63 to charge the storage battery mounted on the electric vehicle 63.

It should be understood that the present invention is not limited to the above examples. For example, the above examples have been described in detail to provide simple understanding of the present invention, and the present invention is not necessarily limited to including all the components and configurations described above. Further, on a portion of the configuration in each example, addition, deletion and replacement of another configuration may be made. However, the scope of the invention is solely defined made. by the appended claims.

For example, the number of windings included in the multi-winding transformer is not limited to six, and may be set, as appropriate, according to the number (two or more) of unit converters (rectifiers) connected in series on the AC side, and the number of a power generating device/power generating devices, an electric storage device/electric storage devices, and a load device/load devices. It is noted that, as in the case of the power supply device in the above-described examples, the number of windings is at least four (the number of series connections of unit converters is two or more) when at least the electric storage device and the power receiving equipment (the load device, the electric storage device (when charged)) are connected at least one by one.

Also, the power from the external AC power system 100 may not be limited to be single-phase AC power, but may be three phase AC power. In this case, a three-phase full bridge circuit may be applied as a unit converter 1, 2, 3 (rectifier) .

Reference Signs List

1, 2, 3... unit converter,
10... reactor
20... multi-winding transformer
11, 12, 13, 21, 22, 23... unit converter
31... power generating device
32... electric storage device
33... load device
61, 62, 63... electric vehicle
100... external AC power system
200... control device

**Claims**

1. A power supply device, comprising:

   a multi-winding transformer (20); and
   a plurality of power converters connected to the multi-winding transformer (20),
   wherein the multi-winding transformer (20) has a plurality of first windings (n11, n12, n13) to which a plurality of first power converters (1, 11; 2, 12; 3, 13) of the plurality of power converters are connected,
   the plurality of first power converters include rectifier portions (1, 2, 3) and converter portions (11, 12, 13) that are connected to the rectifier portions and convert DC power to AC power,
   AC sides of the plurality of rectifier portions are connected in series to each other, and also are configured to be connected to an external AC power system (100),
   DC sides of the rectifier portions are connected to DC sides of the converter portions,
   AC sides of the converter portions are connected to the plurality of first windings,
   the multi-winding transformer (20) has a second winding (n22) to which a second power converter (22) of the plurality of power converters is connected,
   an AC side of the second power converter is connected to the second winding,
   a DC side of the second power converter is configured to be connected to an electric storage device (32),
   the multi-winding transformer (20) has a third winding (n23) to which a third power converter (23) of the plurality of power converters is connected,
   an AC side of the third power converter is connected to the third winding, and
   a DC side of the third power converter is configured to be connected to a power receiving equipment (33),
   wherein the power supply device comprises a control device (200) configured to:

      during a normal state of the external AC power system (100), control the plurality of first power converters and the second power converter in order to transmit power from the external AC power system (100) to the electric storage device (32) via the plurality of first power converters, the plurality of first windings, the second winding, and the second power converter,

during the normal state of the external AC power system (100), control the plurality of first power converters and the third power converter in order to transmit power from the external AC power system (100) to the power receiving equipment via the plurality of first power converters, the plurality of first windings, the third winding, and the third power converter, and

during power interruption of the external AC power system (100), control the second power converter and the third power converter in order to transmit power from the electric storage device (32) to the power receiving equipment via the second power converter, the second winding, the third winding, and the third power converter,

wherein the converter portions of the plurality of first power converters, the second power converter and the third power converter are configured such that each of their AC side voltages is a square wave AC voltage,

**characterized in that**

the control device (200) is configured to:

> during the normal state of the external AC power system (100), control the second power converter to set a phase difference between the square wave AC voltage of the first power converter and the square wave AC voltage of the second power converter,
>
> during the normal state of the external AC power system (100), control the third power converter to set a phase difference between the square wave AC voltage of the first power converter and the square wave AC voltage of the third power converter, and
>
> during the power interruption of the external AC power system (100), control the third power converter to set a phase difference between the square wave AC voltage of the second power converter and the square wave AC voltage of the third power converter.

2. The power supply device according to claim 1,
   wherein during the power interruption of the external AC power system (100), the control device is configured to control the converter portions of the plurality of first power converters to output power.

3. The power supply device according to claim 2,
   wherein the control device is configured to control the plurality of converter portions in the plurality of first power converters to balance DC side voltages.

4. The power supply device according to claim 2,
   wherein the control device is configured to control the plurality of converter portions in the plurality of first power converters to balance AC side voltages.

5. The power supply device according to claim 1,

> wherein the multi-winding transformer (20) has a fourth winding (n21) to which a fourth power converter (21) of the plurality of power converters is connected,
> an AC side of the fourth power converter is connected to the fourth winding, and
> a DC side of the fourth power converter is configured to be connected to a power generating device (31),
> wherein the control device (200) is configured to:
>
> during the normal state of the external AC power system (100), control the fourth power converter and the second power converter in order to transmit power from the power generating device (31) to the electric storage device (32) via the fourth power converter, the fourth winding, the second winding, and the second power converter,
>
> during the normal state of the external AC power system (100), control the fourth power converter and the third power converter in order to transmit power from the power generating device (31) to the power receiving equipment via the fourth power converter, the fourth winding, the third winding, and the third power converter, and
>
> during the power interruption of the external AC power system (100), control the fourth power converter and the third power converter in order to transmit power from the power generating device (31) to the power receiving equipment via the fourth power converter, the fourth winding, the third winding, and the third power converter.

6.  The power supply device according to claim 1,
    wherein the power receiving equipment is a load device (33).

7.  The power supply device according to claim 1,
    wherein the power receiving equipment is another electric storage device separate from the electric storage device (32).

8.  The power supply device according to claim 1,
    wherein the DC side of the second power converter is configured to be connected to an electric vehicle (61, 62, 63) comprising the electric storage device.

9.  The power supply device according to claim 7,
    wherein the DC side of the third power converter is configured to be connected to an electric vehicle (61, 62, 63) comprising the other electric storage device.


**Patentansprüche**

1.  Stromversorgungsvorrichtung, die Folgendes umfasst:

    einen Mehrfachwicklungs-Transformator (20); und
    mehrere Leistungsumsetzer, die mit dem Mehrfachwicklungs-Transformator (20) verbunden sind,
    wobei der Mehrfachwicklungs-Transformator (20) mehrere erste Wicklungen (n11, n12, n13) aufweist, mit denen mehrere erste Leistungsumsetzer (1, 11; 2, 12; 3, 13) der mehreren Leistungsumsetzer verbunden sind,
    die mehreren ersten Leistungsumsetzer Gleichrichterabschnitte (1, 2, 3) und Umsetzerabschnitte (11, 12, 13), die mit den Gleichrichterabschnitten verbunden sind und Gleichstromleistung in Wechselstromleistung umsetzen, enthalten,
    die Wechselstromseiten der mehreren Gleichrichterabschnitte miteinander in Reihe geschaltet sind und außerdem konfiguriert sind, mit einem externen Wechselstromsystem (100) verbunden zu sein,
    die Gleichstromseiten der Gleichrichterabschnitte mit den Gleichstromseiten der Umsetzerabschnitte verbunden sind;
    die Wechselstromseiten der Umsetzerabschnitte mit den mehreren ersten Wicklungen verbunden sind,
    der Mehrfachwicklungs-Transformator (20) eine zweite Wicklung (n22) aufweist, mit der ein zweiter Leistungsumsetzer (22) der mehreren Leistungsumsetzer verbunden ist,
    eine Wechselstromseite des zweiten Leistungsumsetzers mit der zweiten Wicklung verbunden ist,
    eine Gleichstromseite des zweiten Leistungsumsetzers konfiguriert ist, mit einer elektrischen Speichervorrichtung (32) verbunden zu sein,
    der Mehrfachwicklungs-Transformator (20) eine dritte Wicklung (n23) aufweist, mit der ein dritter Leistungsumsetzer (23) der mehreren Leistungsumsetzer verbunden ist,
    eine Wechselstromseite des dritten Leistungsumsetzers mit der dritten Wicklung verbunden ist und
    eine Gleichstromseite des dritten Leistungsumsetzers konfiguriert ist, mit einer Leistung aufnehmenden Ausrüstung (33) verbunden zu sein,
    wobei die Stromversorgungsvorrichtung eine Steuervorrichtung (200) umfasst, die konfiguriert ist zum:

    Steuern der mehreren ersten Leistungsumsetzer und des zweiten Leistungsumsetzers während eines regulären Zustands des externen Wechselstromsystems (100), um über die mehreren ersten Leistungsumsetzer, die mehreren ersten Wicklungen, die zweite Wicklung und den zweiten Leistungsumsetzer Leistung vom externen Wechselstromsystem (100) zur elektrischen Speichervorrichtung (32) zu übertragen,
    Steuern der mehreren ersten Leistungsumsetzer und des dritten Leistungsumsetzers während des regulären Zustands des externen Wechselstromsystems (100), um über die mehreren ersten Leistungsumsetzer, die mehreren ersten Wicklungen, die dritte Wicklung und den dritten Leistungsumsetzer Leistung vom externen Wechselstromsystem (100) zur Leistung aufnehmenden Ausrüstung zu übertragen, und
    Steuern des zweiten Leistungsumsetzers und des dritten Leistungsumsetzers während einer Leistungsunterbrechung des externen Wechselstromsystems (100), um über den zweiten Leistungsumsetzer, die zweite Wicklung, die dritte Wicklung und den dritten Leistungsumsetzer Leistung von der elektrischen Speichervorrichtung (32) zur Leistung aufnehmenden Ausrüstung zu übertragen,
    wobei die Umsetzerabschnitte der mehreren ersten Leistungsumsetzer, des zweiten Leistungsumsetzers und des dritten Leistungsumsetzers derart konfiguriert sind, dass jede ihrer wechselstromseitigen Spannungen eine Rechteckwellen-Wechselspannung ist,

**dadurch gekennzeichnet, dass** die Steuervorrichtung (200) konfiguriert ist zum:

Steuern des zweiten Leistungsumsetzers während des regulären Zustands des externen Wechselstromsystems (100), eine Phasendifferenz zwischen der Rechteckwellen-Wechselspannung des ersten Leistungsumsetzers und der Rechteckwellen-Wechselspannung des zweiten Leistungsumsetzers einzustellen,

Steuern des dritten Leistungsumsetzers während des regulären Zustands des externen Wechselstromsystems (100), eine Phasendifferenz zwischen der Rechteckwellen-Wechselspannung des ersten Leistungsumsetzers und der Rechteckwellen-Wechselspannung des dritten Leistungsumsetzers einzustellen, und

Steuern des dritten Leistungsumsetzers während der Leistungsunterbrechung des externen Wechselstromsystems (100), eine Phasendifferenz zwischen der Rechteckwellen-Wechselspannung des zweiten Leistungsumsetzers und der Rechteckwellen-Wechselspannung des dritten Leistungsumsetzers einzustellen.

2. Stromversorgungsvorrichtung nach Anspruch 1,
wobei während der Leistungsunterbrechung des externen Wechselstromsystems (100) die Steuervorrichtung konfiguriert ist, die Umsetzerabschnitte der mehreren ersten Leistungsumsetzer derart zu steuern, dass sie Leistung ausgeben.

3. Stromversorgungsvorrichtung nach Anspruch 2,
wobei die Steuervorrichtung konfiguriert ist, die mehreren Umsetzerabschnitte in den mehreren ersten Leistungsumsetzern derart zu steuern, dass sie Gleichstrom-Nebenspannungen ausgleichen.

4. Stromversorgungsvorrichtung nach Anspruch 2,
wobei die Steuervorrichtung konfiguriert ist, die mehreren Umsetzerabschnitte in den mehreren ersten Leistungsumsetzern derart zu steuern, dass sie Wechselstrom-Nebenspannungen ausgleichen.

5. Stromversorgungsvorrichtung nach Anspruch 1,

wobei der Mehrfachwicklungs-Transformator (20) eine vierte Wicklung (n21) aufweist, mit der ein vierter Leistungsumsetzer (21) der mehreren Leistungsumsetzer verbunden ist,
eine Wechselstromseite des vierten Leistungsumsetzers mit der vierten Wicklung verbunden ist und
eine Gleichstromseite des vierten Leistungsumsetzers konfiguriert ist, mit einer Energieerzeugungsvorrichtung (31) verbunden zu sein,
wobei die Steuervorrichtung (200) konfiguriert ist zum:

Steuern des vierten Leistungsumsetzers und des zweiten Leistungsumsetzers während des regulären Zustands des externen Wechselstromsystems (100), um über den vierten Leistungsumsetzer, die vierte Wicklung, die zweite Wicklung und den zweiten Leistungsumsetzer Leistung von der Energieerzeugungsvorrichtung (31) zur elektrischen Speichervorrichtung (32) zu übertragen,

Steuern des vierten Leistungsumsetzers und des dritten Leistungsumsetzers während des regulären Zustands des externen Wechselstromsystems (100), um über den vierten Leistungsumsetzer, die vierte Wicklung, die dritte Wicklung und den dritten Leistungsumsetzer Leistung von der Energieerzeugungsvorrichtung (31) zur Leistung aufnehmenden Ausrüstung zu übertragen, und

Steuern des vierten Leistungsumsetzers und des dritten Leistungsumsetzers während der Leistungsunterbrechung des externen Wechselstromsystems (100), um über den vierten Leistungsumsetzer, die vierte Wicklung, die dritte Wicklung und den dritten Leistungsumsetzer Leistung von der Energieerzeugungsvorrichtung (31) zur Leistung aufnehmenden Ausrüstung zu übertragen.

6. Stromversorgungsvorrichtung nach Anspruch 1,
wobei die Leistung aufnehmende Ausrüstung eine Lastvorrichtung (33) ist.

7. Stromversorgungsvorrichtung nach Anspruch 1,
wobei die Leistung aufnehmende Ausrüstung eine weitere elektrische Speichervorrichtung ist, die von der elektrischen Speichervorrichtung (32) getrennt ist.

8. Stromversorgungsvorrichtung nach Anspruch 1,
   wobei die Gleichstromseite des zweiten Leistungsumsetzers konfiguriert ist, mit einem Elektrofahrzeug (61, 62, 63) verbunden zu sein, das die elektrische Speichervorrichtung umfasst.

9. Stromversorgungsvorrichtung nach Anspruch 7,
   wobei die Gleichstromseite des dritten Leistungsumsetzers konfiguriert ist, mit einem Elektrofahrzeug (61, 62, 63) verbunden zu sein, das die andere elektrische Speichervorrichtung umfasst.

**Revendications**

1. Dispositif d'alimentation de puissance, comprenant :

   un transformateur à enroulements multiples (20) ; et
   une pluralité de convertisseurs de puissance connectés au transformateur à enroulements multiples (20),
   dans lequel le transformateur à enroulements multiples (20) a une pluralité de premiers enroulements (n11, n12, n13) auxquels sont connectés une pluralité de premiers convertisseurs de puissance (1, 11 ; 2, 12 ; 3, 13) de la pluralité de convertisseurs de puissance,
   la pluralité de premiers convertisseurs de puissance incluent des portions de redresseur (1, 2, 3) et des portions de convertisseur (11, 12, 13) qui sont connectés aux portions de redresseur et qui convertissent une puissance CC en puissance CA,
   des côtés CA de la pluralité de portions de redresseur sont connectés en série les uns aux autres, et sont également configurés pour être connectés à un système de puissance CA externe (100),
   des côtés CC des portions de redresseur sont connectés aux côtés CC des portions de convertisseur,
   des côtés CA des portions de convertisseur sont connectés à la pluralité de premiers enroulements,
   le transformateur à enroulements multiples (20) a un deuxième enroulement (n22) auquel est connecté un deuxième convertisseur de puissance (22) de la pluralité de convertisseurs de puissance,
   un côté CA du deuxième convertisseur de puissance est connecté au deuxième enroulement,
   un côté CC du deuxième convertisseur de puissance est configuré pour être connecté à un dispositif de stockage électrique (32),
   le transformateur à enroulements multiples (20) a un troisième enroulement (n23) auquel est connecté un troisième convertisseur de puissance (23) de la pluralité de convertisseurs de puissance,
   un côté CA du troisième convertisseur de puissance est connecté au troisième enroulement, et
   un côté CC du troisième convertisseur de puissance est configuré pour être connecté à un équipement de réception de puissance (33),
   dans lequel le dispositif d'alimentation de puissance comprend un dispositif de commande (200) configuré pour :

   pendant un état normal du système de puissance CA externe (100), commander la pluralité de premiers convertisseurs de puissance et le deuxième convertisseur de puissance afin de transmettre une puissance depuis le système de puissance CA externe (100) jusqu'au dispositif de stockage électrique (32) via la pluralité de premiers convertisseurs de puissance, la pluralité de premiers enroulements, le deuxième enroulement, et le deuxième convertisseur de puissance,
   durant l'état normal du système de puissance CA externe (100), commander la pluralité de premiers convertisseurs de puissance et le troisième convertisseur de puissance afin de transmettre une puissance depuis le système de puissance CA externe (100) jusqu'à l'équipement de réception de puissance via la pluralité de premiers convertisseurs de puissance, la pluralité de premiers enroulements, le troisième enroulement, et le troisième convertisseur de puissance, et
   durant une interruption de puissance du système de puissance CA externe (100), commander le deuxième convertisseur de puissance et le troisième convertisseur de puissance afin de transmettre une puissance depuis le dispositif de stockage électrique (32) jusqu'à l'équipement de réception de puissance via le deuxième convertisseur de puissance, le deuxième enroulement, le troisième enroulement, et le troisième convertisseur de puissance,
   dans lequel les portions de convertisseur de la pluralité de premiers convertisseurs de puissance, le deuxième convertisseur de puissance et le troisième convertisseur de puissance sont configurés de telle sorte que chacune de leurs tensions côté CA est une tension CA à onde carrée,
   **caractérisé en ce que**
   le dispositif de commande (200) est configuré pour :

durant l'état normal du système de puissance CA externe (100), commander le deuxième convertisseur de puissance pour définir une différence de phase entre la tension CA à onde carrée du premier convertisseur de puissance et la tension CA à onde carrée du deuxième convertisseur de puissance, durant l'état normal du système de puissance CA externe (100), commander le troisième convertisseur de puissance pour définir une différence de phase entre la tension CA à onde carrée du premier convertisseur de puissance et la tension CA à onde carrée du troisième convertisseur de puissance, et durant l'interruption de puissance du système de puissance CA externe (100), commander le troisième convertisseur de puissance pour définir une différence de phase entre la tension CA à onde carrée du deuxième convertisseur de puissance et la tension CA à onde carrée du troisième convertisseur de puissance.

2. Dispositif d'alimentation de puissance selon la revendication 1,
dans lequel, durant l'interruption de puissance du système de puissance CA externe (100), le dispositif de commande est configuré pour commander les portions de convertisseur de la pluralité de premiers convertisseurs de puissance afin de sortir une puissance.

3. Dispositif d'alimentation de puissance selon la revendication 2,
dans lequel le dispositif de commande est configuré pour commander la pluralité de portions de convertisseur dans la pluralité de premiers convertisseurs de puissance afin d'équilibrer des tensions côté CC.

4. Dispositif d'alimentation de puissance selon la revendication 2,
dans lequel le dispositif de commande est configuré pour commander la pluralité de portions de convertisseur dans la pluralité de premiers convertisseurs de puissance afin d'équilibrer des tensions côté CA.

5. Dispositif d'alimentation de puissance selon la revendication 1,

dans lequel le transformateur à enroulements multiples (20) a un quatrième enroulement (n21) auquel est connecté un quatrième convertisseur de puissance (21) de la pluralité de convertisseurs de puissance,
un côté CA du quatrième convertisseur de puissance est connecté au quatrième enroulement, et
un côté CC du quatrième convertisseur de puissance est configuré pour être connecté à un dispositif de génération de puissance (31),
dans lequel le dispositif de commande (200) est configuré pour :

durant l'état normal du système de puissance CA externe (100), commander le quatrième convertisseur de puissance et le deuxième convertisseur de puissance afin de transmettre une puissance depuis le dispositif de génération de puissance (31) jusqu'au dispositif de stockage électrique (32) via le quatrième convertisseur de puissance, le quatrième enroulement, le deuxième enroulement, et le deuxième convertisseur de puissance,
durant l'état normal du système de puissance CA externe (100), commander le quatrième convertisseur de puissance et le troisième convertisseur de puissance afin de transmettre une puissance depuis le dispositif de génération de puissance (31) à l'équipement de réception de puissance via le quatrième convertisseur de puissance, le quatrième enroulement, le troisième enroulement et le troisième convertisseur de puissance, et
durant l'interruption de puissance du système de puissance CA externe (100), commander le quatrième convertisseur de puissance et le troisième convertisseur de puissance afin de transmettre une puissance depuis le dispositif de génération de puissance (31) jusqu'à l'équipement de réception de puissance via le quatrième convertisseur de puissance, le quatrième enroulement, le troisième enroulement, et le troisième convertisseur de puissance.

6. Dispositif d'alimentation de puissance selon la revendication 1,
dans lequel l'équipement de réception de puissance est un dispositif de charge (33).

7. Dispositif d'alimentation de puissance selon la revendication 1,
dans lequel l'équipement de réception de puissance est un autre dispositif de stockage électrique distinct du dispositif de stockage électrique (32).

8. Dispositif d'alimentation de puissance selon la revendication 1,
dans lequel le côté CC du deuxième convertisseur de puissance est configuré pour être connecté à un véhicule électrique (61, 62, 63) comprenant le dispositif de stockage électrique.

9. Dispositif d'alimentation de puissance selon la revendication 7,
   dans lequel le côté CC du troisième convertisseur de puissance est configuré pour être connecté à un véhicule électrique (61, 62, 63) comprenant l'autre dispositif de stockage électrique.

# FIG. 1

# FIG. 2

AC SIDE

DC SIDE

# FIG. 3

$P_{11}$ POWER SUPPLYING

$P_{21}$ POWER SUPPLYING

$P_{12}$ POWER SUPPLYING

$P_{22}$ POWER RECEIVING

$P_{13}$ POWER SUPPLYING

$P_{23}$ POWER RECEIVING

20

## FIG. 4

SET $P_{11}, P_{12}, P_{13}, P_{22}$ UNDER CONDITION OF
$P_{22} = P_{11} + P_{12} + P_{13} + P_{21} - P_{23}$
ACCORDING TO $P_{21}$ AND $P_{23}$
— S11

⬇

CONTROL BALANCE ($V_1 = V_2 = V_3$) OF
DC VOLTAGES $V_1, V_2, V_3$ AND MAGNITUDE AND
BALANCE ($V_4 = V_5 = V_6$) OF DC VOLTAGES $V_4, V_5, V_6$
— S12

⬇

OUTPUT SQUARE WAVE AC VOLTAGES $V_{11}, V_{12}, V_{13}$
— S13

⬇

CONTROL OUTPUT OF SQUARE WAVE AC VOLTAGE $V_{21}$
TO BE IN PHASE WITH $V_{11}, V_{12}, V_{13}$
— S14

⬇

CONTROL PHASE DIFFERENCE BETWEEN SQUARE WAVE
AC VOLTAGE $V_{22}$ AND $V_{11}, V_{12}, V_{13}$ TO TRANSMIT
$P_{22}$ TO ELECTRICAL STORAGE DEVICE
— S15

⬇

CONTROL PHASE DIFFERENCE BETWEEN SQUARE WAVE
AC VOLTAGE $V_{23}$ AND $V_{11}, V_{12}, V_{13}$ TO TRANSMIT
$P_{23}$ TO LOAD DEVICE
— S16

# FIG. 5

## FIG. 6

$n_{11}$  $n_{21}$

$\Leftarrow$ $P_{21}$ POWER SUPPLYING

$n_{12}$  $n_{22}$

$\Leftarrow$ $P_{22}$ POWER SUPPLYING

$n_{13}$  $n_{23}$

$\Rightarrow$ $P_{23}$ POWER RECEIVING

20

## FIG. 7

| | |
|---|---|
| SET $P_{22}$ UNDER CONDITION OF $P_{22}=P_{23}-P_{21}$ ACCORDING TO $P_{21}$ AND $P_{23}$ | S21 |
| CONTROL MAGNITUDE AND BALANCE $(V_4=V_5=V_6)$ OF DC VOLTAGES $V_4, V_5, V_6$ | S22 |
| OUTPUT SQUARE WAVE AC VOLTAGE $V_{21}$ | S23 |
| CONTROL OUTPUT OF SQUARE WAVE AC VOLTAGE $V_{22}$ TO BE IN PHASE WITH $V_{21}$ | S24 |
| CONTROL PHASE DIFFERENCE BETWEEN $V_{23}$ AND $V_{21}$ TO TRANSMIT $P_{23}$ TO LOAD DEVICE | S25 |
| CONTROL OUTPUT OF SQUARE WAVE AC VOLTAGES $V_{11}, V_{12}, V_{13}$ TO BE IN PHASE WITH $V_{21}$ AND CONTROL BALANCE $(V_1=V_2=V_3)$ OF $V_1, V_2, V_3$ | S26 |

# FIG. 8

# FIG. 9

# FIG. 10

$P_{11}$ POWER SUPPLYING ⟹    $n_{11}$ $n_{21}$    ⟹ $P_{21}$ POWER RECEIVING

$P_{12}$ POWER SUPPLYING ⟹    $n_{12}$ $n_{22}$    ⟹ $P_{22}$ POWER RECEIVING

$P_{13}$ POWER SUPPLYING ⟹    $n_{13}$ $n_{23}$    ⟹ $P_{23}$ POWER RECEIVING

20

# FIG. 11

S31

| SET DISTRIBUTIONS P21, P22, P23 |
|---|

S32

| CONTROL BALANCE ($V_1 = V_2 = V_3$) OF DC VOLTAGES $V_1, V_2, V_3$ AND MAGNITUDE AND BALANCE ($V_4 = V_5 = V_6$) OF DC VOLTAGES $V_4, V_5, V_6$ |
|---|

S33

| OUTPUT SQUARE WAVE AC VOLTAGES $V_{11}, V_{12}, V_{13}$ |
|---|

S34

| CONTROL PHASE DIFFERENCE BETWEEN SQUARE WAVE AC VOLTAGE $V_{21}$ AND $V_{11}, V_{12}, V_{13}$ TO TRANSMIT $P_{21}$ TO EV(61) |
|---|

S35

| CONTROL PHASE DIFFERENCE BETWEEN SQUARE WAVE AC VOLTAGE $V_{22}$ AND $V_{11}, V_{12}, V_{13}$ TO TRANSMIT $P_{22}$ TO EV(62) |
|---|

S36

| CONTROL PHASE DIFFERENCE BETWEEN SQUARE WAVE AC VOLTAGE $V_{23}$ AND $V_{11}, V_{12}, V_{13}$ TO TRANSMIT $P_{23}$ TO EV(63) |
|---|

# FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020101747

**Non-patent literature cited in the description**

- **C. GU** ; **Z. ZHENG** ; **L. XU** ; **K. WANG** ; **Y. LI**. Modeling and Control of a Multiport Power Electronic Transformer (PET) for Electric Traction Applications. *IEEE Transactions on Power Electronics*, February 2016, vol. 31 (2), 915-927

- **I. ATHANASIOS et al.** Overview of Three-Stage Power Converter Topologies for Medium-Frequency-Based Railway Vehicle Traction Systems. *IEEE Transactions on Vehicular Technology*, April 2019, vol. 68 (4), 3268-3278